# EUROPÄISCHE PATENTSCHRIFT

(11) **EP 0 616 679 B1**
(45) Veröffentlichungstag und Bekanntmachung des Hinweises auf die Patenterteilung: **05.03.1997**
(21) Anmeldenummer: 93900084.0
(22) Anmeldetag: 18.12.1992
(51) Int. Cl.: F28F 9/02

(54) **KÜHLLUFTKÜHLER FÜR GASTURBINEN**
COOLING-AIR COOLING UNIT FOR GAS TURBINES
REFROIDISSEUR A AIR FROID POUR TURBINES A GAZ

(30) Priorität: 20.12.1991 DE 4142375
(43) Veröffentlichungstag der Anmeldung: 28.09.1994
(73) Patentinhaber: SIEMENS AKTIENGESELLSCHAFT, 80333 München (DE)
(72) Erfinder: TRATZ, Herbert, D-8561 Ottensoos (DE); BÖKEMEIER, Volker, D-8510 Fürth-Vach (DE); GEBKE, Klaus, D-6460 Gelnhausen-Hailer (DE); BÄHR, Siegfried, D-8557 Eggolsheim (DE)
(86) Internationale Anmeldenummer: DE9201064
(87) Internationale Veröffentlichungsnummer: WO9313378

(56) Entgegenhaltungen:
- WO-A-91/15728
- BE-A- 665 951
- DE-A- 2 247 490
- FR-A- 2 253 999
- FR-A- 2 415 790
- US-A- 1 604 197
- US-A- 4 157 114

## Beschreibung

Die Erfindung betrifft einen Kühlluftkühler für eine Gasturbine gemäß dem Oberbegriff des Anspruchs 1. Ein derartiger Kühlluftkühler ist aus der FR-A-22 53 999 bekannt.

Die Kühlung von Gasturbinenschaufeln erfolgt üblicherweise mittels eines Luftstroms. Dieser Luftstrom wird häufig von der komprimierten Verbrennungsluft für die Gasturbinenbrennkammer als Teilluftstrom abgezweigt. Die bei der Kompression auch diesem Teilluftstrom zugeführte Wärme wird diesem Teilluftstrom in einem Kühlluftkühler wieder entzogen und einem Wärmeprozeß zugeführt.

Durch häufiges Anfahren und Abfahren der Gasturbine sowie des zugehörigen Kühlluftkühlers, beispielsweise in Anlagen gemäß der EP-A-519 304, wird der Einströmbereich des Kühlluftkühlers extremen Wechselbelastungen durch unterschiedliche Temperaturen ausgesetzt. Diese Wechselbelastungen können zum vorzeitigen Versagen der Kühlluftkühler führen.

Der Erfindung liegt daher die Aufgabe zugrunde, einen Kühlluftkühler zu schaffen, der die in derartigen Anlagen auftretende große Anzahl von Lastwechselspielen sicher beherrscht, wobei der Aufwand für die Herstellung des Kühlluftkühlers nur geringfügig von dem bisher erforderlichen Aufwand abweichen soll.

Erfindungsgemäß wird diese Aufgabe für einen Kühlluftkühler der eingangs genannten Art gelöst durch die kennzeichnenden Merkmale des Anspruchs 1.

Die dünnwandige, in Umfangsrichtung geschlossene ringförmige Aufhängung geht in Achsrichtung vom Rand der einseitig eingespannten Rohrplatte aus und verbindet diese mit dem Behältermantel. Dabei ist vorteilhafterweise ein vom Behältermantel umfaßter Querschnitt im Bereich der Stoßstelle mit der Aufhängung stufenartig verändert, so daß zwischen dem Behältermantel einerseits und der Rohrplatte sowie der Aufhängung andererseits ein Ringraum gebildet ist.

In der Rohrplatte ist neben der Stoßstelle mit der Aufhängung eine umlaufende Hohlkehle vorgesehen. Auch kann der Rand der Rohrplatte einen umlaufenden, sich der Stoßstelle mit der Aufhängung entgegenstreckenden Kragen aufweisen. Die Erfindung ist sehr vorteilhaft, denn durch die ringförmige und gegenüber der Rohrplatte deutlich dünnere Aufhängung treten praktisch keine thermisch bedingten Spannungen zwischen dem Rohrboden und dem Behältermantel auf, so daß auch häufig auftretende Temperaturwechsel von 250° C und mehr ohne weiteres beherrscht werden. Dies gilt uneingeschränkt auch bei Temperaturänderungsgeschwindigkeiten von 100° C/s und mehr.

Zwei Ausführungsbeispiele der Erfindung werden anhand einer Zeichnung näher erläutert. Im einzelnen zeigen:
- Figur 1: einen Längsschnitt durch einen Kühlluftkühler mit Druckwasser als Kühlmedium,

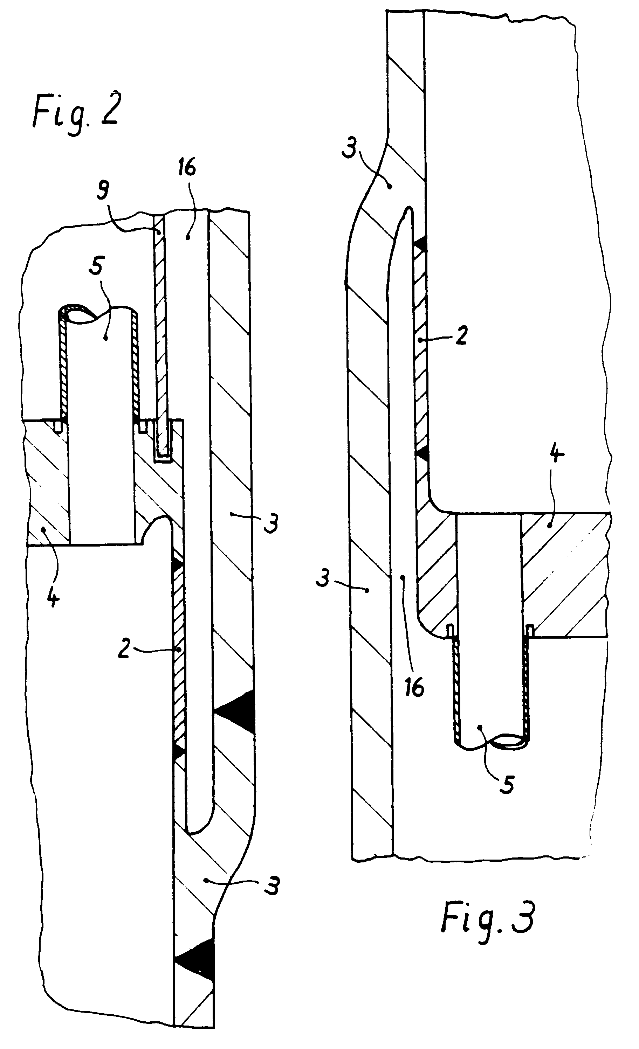

- Figur 2: eine Einzelheit aus Figur 1 im Bereich der Aufhängung einer Rohrplatte in vergrößertem Maßstab,
- Figur 3: eine Einzelheit aus Figur 4, wiederum im Bereich der Aufhängung einer Rohrplatte in größerem Maßstab und
- Figur 4: einen Längsschnitt durch einen als Verdampfer ausgeführten Kühlluftkühler.

Einander entsprechende Bauteile sind in allen Figuren mit den gleichen Bezugszeichen versehen.

Ein Kühlluftkühler für eine nicht näher dargestellte Gasturbinenanlage dient dazu, insbesondere durch Kompression erwärmte Luft zu kühlen, um deren Kühlwirkung in der Beschaufelung der Gasturbine zu verbessern. Der Kühlluftkühler weist einen langgestreckten, üblicherweise vertikal aufgestellten Mantel 3 auf, dessen unteres Ende durch einen Boden 12 und dessen oberes Ende durch einen Deckel 13 verschlossen ist. Rohrplatten 4 und 7 teilen ein vom Mantel 3 umfaßtes Volumen in eine Lufteintrittskammer 1, einen von Wärmetauscherrohren 5 durchsetzten und mit Kühlmittel angefüllten Raum sowie in eine Austrittskammer 6 für die abgekühlte Luft.

Die Lufteintrittskammer 1 ist über einen Stutzen 14 an eine Zuleitung für zu kühlende Luft angeschlossen, die nach Abkühlung in den Wärmetauscherrohren 5 durch die Austrittskammer 6 und einen Stutzen 15 einer Gasturbine zugeführt wird.

Die von der Luft durchströmten Wärmetauscherrohre 5 sind mit ihren Enden gasdicht an bzw. in den Rohrplatten 4 und 7 verankert und bilden ein Rohrbündel in einem inneren Führungsmantel 9, der das Bündel aus den Wärmetauscherrohren 5 von einem im Querschnitt ringförmigen Raum 16 trennt. Der im Querschnitt ringförmige Raum 16 wird vom Mantel 3 und dem koaxial hierzu angeordneten inneren Führungsmantel 9 gebildet. Der innere Führungsmantel 9 weist an seinen an die Rohrplatten 4 bzw. 7 anstoßenden Enden Fenster auf, durch die der Raum 16 mit dem von dem Bündel aus Wärmetauscherrohren 5 durchsetzten Raum verbunden ist. Stützringe 19 sind auf dem inneren Führungsmantel 9 befestigt und gewährleisten die korrekte Lage desselben. Außerdem verschließen die Stützringe den vom Raum 16 gebildeten axialen Kanal.

Als wärmeaufnehmendes Medium dient beispielsweise Druckwasser, das dem Raum 16 durch einen Stutzen 17 zugeführt wird und von diesem durch die Fenster an dem der Rohrplatte 7 benachbarten Ende des inneren Führungsmantels 9 in den von den Wärmetauscherrohren 5 durchsetzten Raum eintritt und im Gegenstrom an den Wärmetauscherrohren 5 entlang in Richtung auf die Rohrplatte 4 strömt und von dort durch einen Stutzen 18 den Kühlluftkühler wieder verläßt.

Zum Ausgleich von unterschiedlichen Wärmedehnungen zwischen dem Mantel 3 und den Wärmetauscherrohren 5 ist im Mantel 3 ein Kompensator 8 vorgesehen. Dieser Kompensator 8 kann jedoch nur die zwischen den vorgenannten Bauteilen auftretenden unterschiedlichen Längenänderungen ausgleichen.

Der Betrieb von Gasturbinen erfordert üblicherweise einen häufigen und meist auch schnellen Lastwechsel mit einem entsprechend stark schwankenden Kühlluftbedarf. Dadurch ist im Kühlluftkühler vor allem die die Lufteintrittskammer 1 begrenzende Rohrplatte 4 stark schwankenden Temperaturen ausgesetzt. Die aus der komprimierten Verbrennungsluft abgezweigte Kühlluft hat in bestehenden Anlagen üblicherweise eine Temperatur von etwa 400° C und das zur Kühlung dieser Luft dienende Druckwasser wird dem Kühlluftkühler mit einer Temperatur von etwa 80 bis 90° C zugeführt. Um die hieraus resultierenden erheblichen Spannungen in radialer Richtung der Rohrplatte 4 gegenüber dem Mantel 3 auf ein vertretbares Maß zu reduzieren, ist die Rohrplatte 4 einseitig eingespannt, indem sie über eine dünnwandige, in Umfangsrichtung geschlossene, ringförmige Aufhängung 2, die sich in Achsrichtung am Rand der Rohrplatte 4 erstreckt, mit dem Mantel 3 verbunden. Dadurch ist die Rohrplatte 4 einseitig eingespannt und gleichzeitig fest mit dem Mantel 3 verbunden, wobei außerdem die Lufteintrittskammer 1 gegen den von den Wärmetauscherrohren 5 durchsetzten Raum abgedichtet ist.

Zur weiteren Verringerung von Spannungsspitzen in der Aufhängung 2 ist in der Rohrplatte 4 neben der Stoßstelle mit der Aufhängung 2 entweder eine umlaufende Hohlkehle vorgesehen oder weist der Rand der Rohrplatte 4 einen umlaufenden, sich der Stoßstelle mit der Aufhängung 2 entgegenstreckenden Kragen auf.

In den dargestellten Ausführungsbeispielen ist die Rohrplatte 7 radial direkt mit dem Mantel 3 verbunden, weil in diesem Bereich bei entsprechender Betriebsweise keine so großen und vor allem auch keine so schnellen Temperaturwechsel auftreten wie im Bereich der Rohrplatte 4, so daß die direkte radiale Verbindung die auftretenden Spannungen beherrscht. Erfordert jedoch die Betriebsweise der zu kühlenden Gasturbine einen Betrieb, bei dem auch die Rohrplatte 7 starken Temperaturschwankungen ausgesetzt ist, so wird diese analog zur Rohrplatte 4 mit einer dünnwandigen, in Umfangsrichtung geschlossenen, ringförmigen Aufhängung 2 an dem Mantel 3 befestigt.

Um der einseitig eingespannten Rohrplatte 4 in radialer Richtung die erforderliche Bewegungsfreiheit zu geben, ist der vom Behältermantel 3 umfaßte Querschnitt im Bereich der Stoßstelle mit der Aufhängung 2 und der Rohrplatte 4 stufenartig verändert, so daß zwischen dem Behältermantel 3 einerseits und andererseits der Rohrplatte 4 sowie der Aufhängung 2 ein Ringraum gebildet ist. Dieser Ringraum ist zweckmäßigerweise die Fortsetzung des Raums 16.

Im Gegensatz zu der festen Verbindung der Rohrplatten 4 und 7 mit dem Mantel 3 ist der innere Führungsmantel 9 in Achsrichtung verschiebbar von den Rohrplatten 4 und/oder 7 geführt.

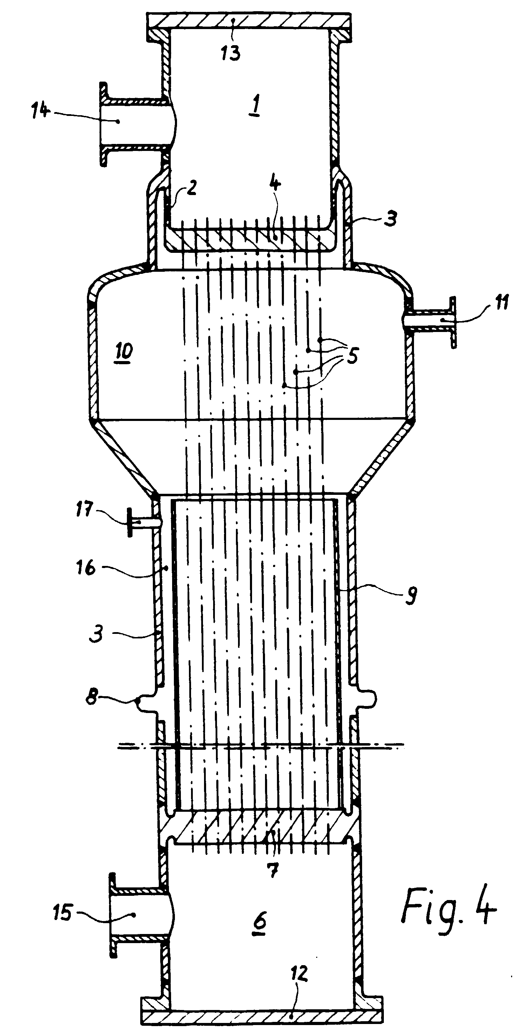

Bei der Ausführung des Kühlluftkühlers gemäß Figur 4 erstreckt sich der innere Führungsmantel 9 nicht über die gesamte Länge des von den Wärmetauscherrohren 5 durchsetzten Raums, sondern bildet in der Nähe der Austrittskammer 6 eine Erweiterung 10 zur Aufnahme von Wasserdampf. Der Wasserdampf wird über einen Stutzen 11 aus dieser Erweiterung 10 abgeführt und beispielsweise nach weiterer Erwärmung der Brennkammer der Gasturbine zugeführt.

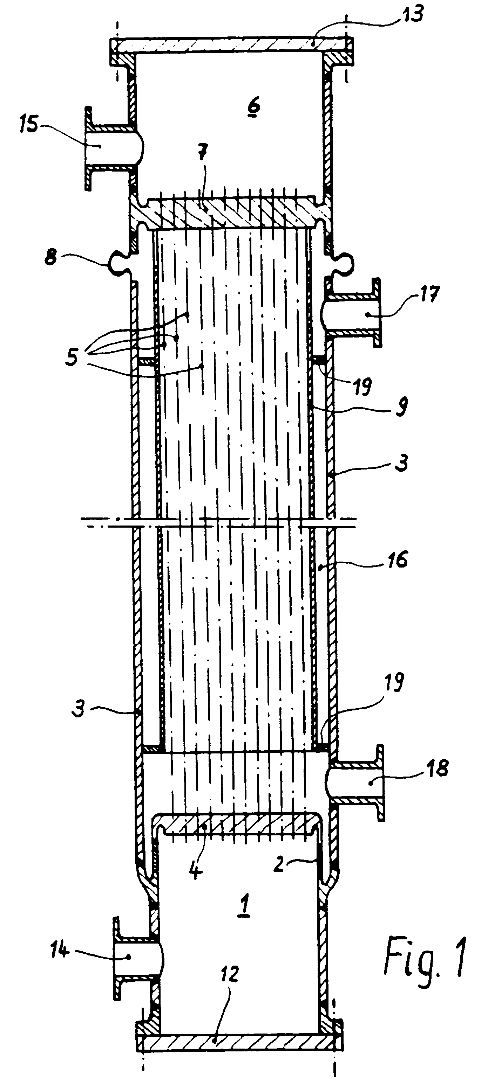

Die den Kühlluftkühlern gemäß den Figuren 1 und 4 mit einer Temperatur von etwa 400° C zugeführte Kühlluft wird beim Passieren der Wärmetauscherrohre 5 auf etwa 150° C abgekühlt. Andererseits wird durch entsprechende Einstellung der Strömungsgeschwindigkeit in einer Anordnung gemäß Figur 1 eingesetztes Druckwasser von etwa 80° C auf etwa 150° C aufgeheizt.

Der Kühlluftkühler gemäß Figur 4 wird mit geringerem Innendruck betrieben, so daß mit einer Temperatur von etwa 80° C zugeführtes Wasser verdampft und in der Erweiterung 10 geringfügig überhitzt wird, bevor der Dampf durch den Stutzen 11 abgeführt wird.

Die erfindungsgemäße Befestigung einer Rohrplatte ist außer in Kühlluftkühlern von Gasturbinen auch in beliebigen Wärmetauschern sinnvoll und immer dann zweckmäßig, wenn häufige, schnelle und/oder große Temperaturwechsel auftreten.

## Patentansprüche

1. Kühlluftkühler für eine Gasturbine, wobei Rohrplatten (4, 7) zur Halterung von Rohren (5) zur Trennung der zu kühlenden Luft von einem wärmeaufnehmenden Medium vorgesehen sind, wobei die Rohrplatten (4, 7) luftgefüllte Kammern (1, 6) von einem mit dem wärmeaufnehmenden Medium gefüllten Raum abteilen, und wobei mindestens die der Eintrittsseite der zu kühlenden Luft zugekehrte, eine Lufteintrittskammer (1) begrenzende Rohrplatte (4) einseitig eingespannt ist, indem eine in Umfangsrichtung geschlossene, ringförmige Aufhängung (2) in Achsrichtung vom Rand der Rohrplatte (4) ausgeht und diese mit dem Behältermantel (3) verbindet,
**dadurch gekennzeichnet**,
- daß die Aufhängung gegenüber der Rohrplatte (4) eine deutlich geringere Dicke aufweist, und
- daß in der Rohrplatte (4) selbst neben der Stoßstelle mit der Aufhängung (2) eine umlaufende Hohlkehle vorgesehen ist.

2. Kühlluftkühler nach Anspruch 1,
**dadurch gekennzeichnet,** daß ein vom Behältermantel (3) umfaßter Querschnitt im Bereich der Stoßstelle mit der Aufhängung (2) stufenartig verändert ist, so daß zwischen dem Behältermantel (3) einerseits und andererseits der Rohrplatte (4) sowie der Aufhängung (2) ein Ringraum (16) gebildet ist.

3. Kühlluftkühler nach einem der Ansprüche 1 oder 2,
**dadurch gekennzeichnet,** daß der Rand der Rohrplatte (4) einen umlaufenden, sich der Stoßstelle mit der Aufhängung (2) entgegenstreckenden Kragen aufweist.

## Claims

1. Cooling-air cooling unit for a gas turbine, whereby tube sheets (4, 7) are provided to support tubes (5) to separate the air to be cooled from a heat-absorbing medium, whereby the tube sheets (4, 7) divide air-filled chambers (1, 6) from an area filled with the heat-absorbing medium, and whereby at least the tube sheet (4) facing the inlet side of the air to be cooled and bordering an air inlet chamber (1) is fixed on one side, in that an annular suspension (2) closed in the circumferential direction issues from the edge of the tube sheet (4) in the axial direction and connects the tube sheet (4) to the casing of the container (3), characterized in that the suspension has a clearly smaller thickness than the tube sheet (4) and in that in the tube sheet (4) itself, next to the contact point with the suspension (2), a circumferential groove is provided.

2. Cooling-air cooling unit according to claim 1, characterized in that a cross section enclosed by the casing of the container (3) in the region of the contact point with the suspension (2) is changed gradually, so that between the casing of the container (3) on the one hand and on the other hand the tube sheet (4) and the suspension (2) an annular area (16) is formed.

3. Cooling-air cooling unit according to one of claims 1 or 2, characterized in that the edge of the tube sheet (4) has a circumferential collar extending towards the contact point with the suspension (2).

## Revendications

1. Refroidisseur à air froid pour une turbine à gaz, des plaques (4, 7) tubulaires, servant à maintenir des tubes (5), étant prévues pour séparer l'air à refroidir d'un fluide absorbant de la chaleur, les plaques (4, 7) tubulaires séparant des chambres (1, 6) remplies d'air d'un espace rempli du fluide absorbant de la chaleur, et au moins la plaque tubulaire (4), tournée vers le côté d'entrée de l'air à refroidir et délimitant une chambre (1) d'entrée d'air, étant bloquée d'un seul côté du fait qu'une suspension (2) annulaire, sans fin dans la direction périphérique part du bord de la plaque tubulaire (4) dans la direction axiale et la relie à la surface latérale (3) de la calandre, caractérisé en ce que,
- la suspension a une épaisseur nettement plus petite que celle de la plaque tubulaire (4) et
- il est prévu dans la plaque tubulaire (4) elle-même, outre le point de rencontre avec la suspension (2), une gorge faisant tout le tour.

2. Refroidisseur à air froid suivant la revendication 1, caractérisé en ce qu'une section transversale qu'entoure la surface latérale (3) de la calandre varie par palier dans la zone du point de rencontre avec la suspension (2), si bien qu'il est formé entre la surface latérale (3), d'une part, et la plaque tubulaire (4) ainsi que la suspension (2), d'autre part, un espace (16) annulaire.

3. Refroidisseur à air froid suivant l'une des revendications 1 ou 2. caractérisé en ce que la plaque tubulaire (4) comporte un collet faisant tout le tour s'étendant en sens opposé du point de rencontre avec la suspension (2).
